# EUROPEAN PATENT APPLICATION

(11) **EP 4 751 799 A1**
(43) Date of publication of application: **03.06.2026**
(21) Application number: 24862725.9
(22) Date of filing: 30.08.2024
(51) Int. Cl.: B01F 21/20, B01F 23/232, B01F 23/2375, B01F 25/70, C02F 1/32, C02F 1/78

(54) **METHOD FOR PRODUCING GAS-CONTAINING SOLUTION AND SYSTEM FOR PRODUCING GAS-CONTAINING SOLUTION**

(30) Priority: 07.09.2023 JP 2023145292
(71) Applicant: Canon Kabushiki Kaisha, Tokyo 146-8501 (JP)
(72) Inventor: NAKAZAWA, Ikuo, Tokyo 146-8501 (JP); AOTANI, Takaharu, Tokyo 146-8501 (JP)
(74) Representative: WESER & Kollegen Patentanwälte PartmbB
(86) International application number: PCT/JP2024/031195
(87) International publication number: WO 2025/053073

(57) **Abstract**

The present disclosure is directed to providing a gas-containing solution production method and a gas-containing solution production system for effectively using a gas and producing a gas-containing solution with high efficiency. According to the present invention, a gas-containing solution production method includes a vaporization step of vaporizing a liquid stored in a first container, a generation step of generating, by bringing a gas into contact with the vaporized liquid, droplets with the gas dissolved, a transfer step of transferring the gas-dissolved droplets into a second container via a first flow path, separating the gas-dissolved droplets, and transferring a residual gas into the first container via a second flow path, and a collection step of collecting the separated gas-dissolved droplets.

## Description

### Technical Field

The present disclosure relates to a gas-containing solution production method and a gas-containing solution production system 100 production system.

### Background Art

A gas-containing solution has conventionally been produced by dissolving a gas component into a liquid phase centering on a bubbling technique. Typically, in the aquaculture industries, air is bubbled in a tank to suppress the decrease in dissolved oxygen concentration. Unlike air, in a case of using expensive and rare gases or noxious gases, the bubbling method has an issue, and improvements are desired.

### Citation List

### Patent Literature

PTL 1: Japanese Patent No. 4933206

### Summary of Invention

### Technical Problem

However, even though the gas-containing solution described in Patent Document 1 employs an ejector to dissolve a gas, the gas dissolution efficiency per unit area is low.

In view of the above-described issue, the present disclosure is directed to providing a gas-containing solution production method and a gas-containing solution production system for effectively using a gas and producing a gas-containing solution with high efficiency.

### Solution to Problem

According to an aspect of the present invention, a gas-containing solution production method includes a vaporization step of vaporizing a liquid stored in a first container, a generation step of generating, by bringing a gas into contact with the vaporized liquid, droplets with a gas dissolved, a transfer step of transferring gas-dissolved droplets into a second container via a first flow path, separating gas-dissolved droplets, and transferring a residual gas into a first container via a second flow path, and a collection step of collecting separated gas-dissolved droplets.

### Advantageous Effects of Invention

According to the present disclosure, it is possible to provide a gas-containing solution production method and a gas-containing solution production system 100 for effectively using a gas and producing a gas-containing solution with high efficiency.

### Brief Description of Drawings

[Fig. 1] Fig. 1 is a diagram illustrating a production system for producing a gas-containing solution by circulating a gas.
[Fig. 2] Fig. 2 is a diagram illustrating a production system for producing an ozone-containing-gas-containing solution by circulating an ozone-containing gas.
[Fig. 3] Fig. 3 is a diagram illustrating a production system for producing an ozone-containing-gas-containing solution by circulating an ozone-containing gas, using a fractionating column as a separation mechanism.
[Fig. 4] Fig. 4 is a diagram illustrating a production system for producing an ozone-containing-gas-containing solution by circulating an ozone-containing gas, using beads as a separation mechanism.
[Fig. 5] Fig. 5 is a diagram illustrating a production system for producing an ozone-containing-gas-containing solution by circulating an ozone-containing gas, using a mesh-type ultrasonic wave unit as a vaporization unit.
[Fig. 6] Fig. 6 is a diagram illustrating a production system for producing an ozone-containing-gas-containing solution by circulating an ozone-containing gas, using a liquid feed pump type spray as a vaporization unit.
[Fig. 7] Fig. 7 is a diagram illustrating a production system for producing an ozone-containing-gas-containing solution by circulating an ozone-containing gas, including an active oxygen generation unit.

### Description of Embodiments

Embodiments of the present disclosure will be described below. It should be noted, however, that the following embodiments are provided by way of example only and are not intended to unduly limit the scope or spirit of the present disclosure.

In the present invention, fine drops generated through a vaporization process refer to droplets having an average diameter of 1 millimeter (mm) or less. While a vaporization unit applied in the vaporization process is not particularly limited, a device for piezoelectric vaporization is desirable.

Piezoelectric vaporization devices are roughly classified into two different types. One type is an immersion-type, which is installed in a solution to vaporize the liquid in the vicinity of the gas-liquid interface into fine droplets. The other type is a mesh-type, in which piezoelectric elements are disposed around a mesh plate, and fine liquid droplets are supplied through mesh holes via a liquid supply medium. In the present invention, both the immersion type and the mesh type are desirable. The liquid vaporization unit is not limited to the above-described one. A vaporization unit for spraying a high-pressure liquid and gas through a micropore nozzle by using a pump is also desirable. The technique for transferring droplets floating in the gas phase during the transfer process is not particularly limited. A blowing mechanism, such as a blower fan and a diaphragm pump, is desirable. While the mechanism for separating droplets and a gas is not particularly limited, a glass filter having gas-liquid separation capability, in which the cross-sectional area of the gas-phase flow path is irregular is desirable. By making the cross section of the flow path irregular, the cross-sectional shape of the flow path changes, thereby varying the flow velocity and pressure of the gas flowing through the flow path, which enables gas-liquid separation.

The gas-containing solution production method and the gas-containing volume production system according to the present embodiment will be described below with reference to the accompanying drawings.

### [First Embodiment]

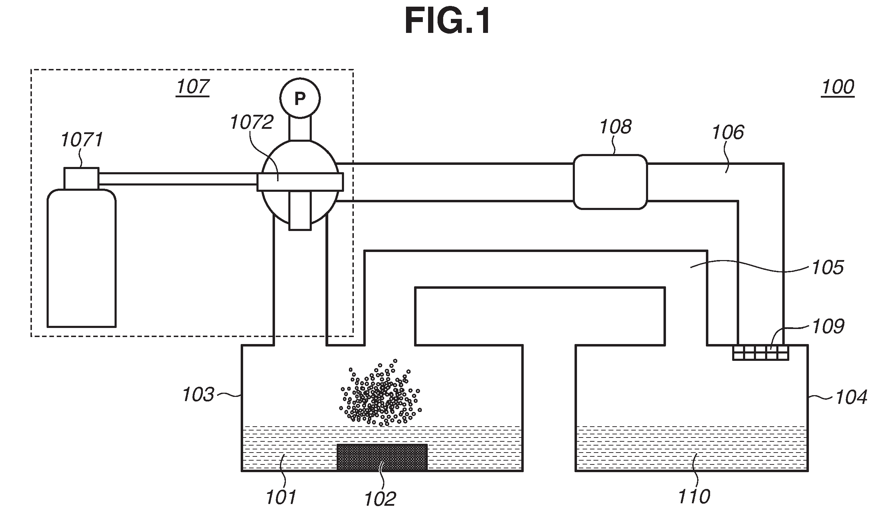

Fig. 1 is a diagram illustrating an example of a functional configuration of a gas-containing solution production system 100. The gas-containing solution production system 100 includes a first container 103, which is isolated from the ambient air, including a vaporization unit 102 for vaporizing a liquid 101 stored therein, and a second container 104, which is isolated from the ambient air. The gas-containing solution production system 100 also includes a first flow path 105 and a second flow path 106 that communicates the first container 103 with the second container 104. The gas-containing solution production system 100 includes a gas supply mechanism 107 for supplying a gas to the liquid vaporized by the vaporization unit 102, and a blowing mechanism 108 for transferring the gas in the second flow path to the first container 103 via the second flow path 106. The gas-containing solution production system 100 further includes a separation mechanism 109 for separating the gas and the vaporized liquid containing gas.

The gas-containing solution production system 100 in the present embodiment has the above-described functional configuration to bring the gas supplied by the gas supply mechanism 107 into contact with the vaporized liquid, whereby gas-dissolved droplets 110 are generated. Further, the separation mechanism 109 separates the gas-dissolved droplets, and the blowing mechanism 108 transfers the residual gas to the first container 103 via the second flow path 106, and the separated droplets are collected via the second container 104. As the method for storing liquid in the first container 103, a liquid may be supplied to the first container 103 by connecting the first container 103 with an external liquid supply source via a supply pipe.

The vaporization unit 102 generates droplets with an average diameter of 1 mm or less, which can float in the gas-containing gas phase for a prolonged period of time, further increasing the ratio of the gas-liquid interface per unit volume of droplets. This enables efficiently dissolving the gas. In other words, a gas-containing solution can be produced with high efficiency. The vaporization unit 102 generates fine bubbles with a diameter of 20 micrometers (µm) or less in droplets. Fine bubbles refer to small bubbles composed of a gas having a diameter of less than 100 µm. It is reported that the dissolution of gas becomes stable when fine bubbles are contained, and this is also a desirable embodiment in the present invention. In particular, ultra fine bubbles (UFB) with a diameter of 1 µm or less are desirable since they do not surface in a liquid. The UFB number percentage refers to the number percentage of ultra fine bubbles with respect to the number of fine bubbles having a diameter of 20 µm or less, and in the present embodiment, the number percentage of ultra fine bubbles with respect to the number of fine bubbles having a diameter of 20 µm or less is 99% or higher. Desirably, the particle diameter distribution of the fine bubbles having a diameter of 20 µm or less generated by the vaporization unit 102 is 5 or less. If the particle diameter distribution is equal to or larger than 5, the surfacing speed of air bubbles increases, possibly preventing the efficient use of the gas. The particle diameter distribution is defined by the ratio of the volume-based mean particle diameter (dw) to the number-based mean particle diameter (dn), expressed as dw/dn. The particle diameter, the particle shape distribution, and the concentration of fine bubbles were measured by using a measuring instrument (model number: SALD-7500nano) from SHIMADZU CORPORATION. In the present specification, fine bubbles (abbreviated to FB) refers to small bubbles composed of a gas. A fine-bubble-containing solution means a liquid containing small bubbles called fine bubbles. A gas of fine bubbles may consist of a single component or multiple components, and the ratio of gas components can be adjusted by controlling gas components in a collection mechanism of the fine-bubble-containing solution. A desired gas component may exist as fine bubbles in a liquid or may be dissolved in a liquid.

In a case where an ultrasonic vibrator is used as the vaporization unit 102, it is desirable that the thickness of the liquid disposed on the vibrator to the liquid level be 15 centimeters (cm) or less, depending on the output intensity. If the thickness of the liquid to the liquid level exceeds 15 cm, the intensity of the ultrasonic irradiation for vaporization increases, possibly causing an influence on the liquid medium. As a specific example of the liquid, water can be mentioned, since there is a concern that water molecules may become hydroxyl radicals and, for example, react with dissolved atmospheric nitrogen components to generate nitrogen oxide ions.

The gas supply mechanism 107 includes, for example, a gas cylinder 1071 serving as a gas supply source, and a valve 1072 for regulating the supply of gas from the gas supply source to the gas-containing solution production system 100 via a gas supply pipe. The gas supply mechanism may include a vacuum pump for exhausting the gas.

The blowing mechanism 108 transfers the gas and the gas-dissolved droplets to the second container 104 via the first flow path 105.

The separation mechanism 109 separates the gas and the gas-dissolved droplets. The blowing mechanism 108 and the separation mechanism 109 collect the gas-containing droplets into the second container 104 while transferring the gas to the first container 103 again via the second flow path 108. With this configuration, the gas can be effectively utilized. In this processing, the gas-dissolved droplets separated by the separation mechanism 109 can be collected by using a cock or the like provided in the second container 104. The method for collecting the droplets in the second container 104 is not limited thereto, and alternatively, it is also desirable that a collection port be disposed in the second container 104 to collect the droplets from the collection port into a collection container.

The gas supply mechanism 107 is, for example, a gas cylinder filled with a gas.

When using a gas having an increased oxygen concentration, an oxygen generator for increasing the atmospheric oxygen concentration may be used as the supply mechanism 107. When using a gas having an increased ozone concentration, it is also desirable that the supply mechanism 107 an ozone generation unit 120 or the like be used. While the separation mechanism 108 for separating droplets and a gas is not particularly limited, it is desirable that a glass filter have an irregular flow-path cross-sectional area in the gas-phase to provide the gas-liquid separability.

To produce a dissolved-gas-containing solution with high efficiency by using the gas-containing solution production system 100, it is desirable that the average relative humidity derived from droplet components in the system be 90% or higher in the environment. If the average value is less than 90%, there is a concern that the mist evaporates before a gas and a liquid are separated, resulting in a small amount of liquid being collected.

As long as the gas-containing solution production method involves a vaporization process, a generation process, a transfer process, and a collection process (described below), the present embodiment is not limited to the above-described system configuration. The vaporization process is a process for vaporizing the liquid stored in the first container, and the generation process is a process for generating droplets in which gas is dissolved by bringing the gas into contact with the vaporized liquid. The transfer process is a process for transferring the gas-dissolved droplets into the second container via the first flow path, separating the gas-dissolved droplets, and transferring a residual gas into the first container via the second flow path. The collection process is a process for collecting the separated gas-dissolved droplets.

In the present embodiment, by configuring the gas-containing solution production system 100 as described above, the gas can be effectively utilized and a gas-containing solution can be produced with high efficiency.

### [Second Embodiment]

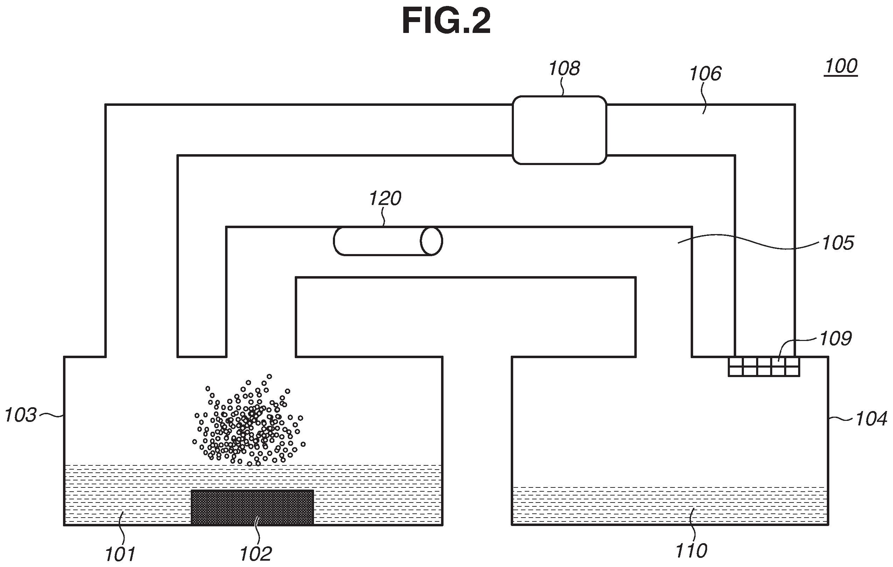

A gas-containing solution production system 100 will be described below with reference to Fig. 2 using a gas-containing solution of a case in which the gas contains ozone. Descriptions of functional configurations similar to those in the first embodiment will be omitted as appropriate. The gas-containing solution production system 100 in the present embodiment includes the ozone generation unit 120 instead of the gas supply mechanism in the first embodiment. The ozone generation unit 120 generates ozone in the predetermined-gas-containing solution production system 100 by irradiating oxygen with ultraviolet light.

As the ozone generation unit 120, it is desirable to use a Xe excimer lamp or an ozone lamp for ozonizing oxygen by using ultraviolet light. It is also desirable to use the ozone generation unit 120 of a discharge type to perform ozonization. Further, it is also desirable to dispose the ozone generation unit 120 of an electrolysis type to incorporate ozone by electrolyzing water. The ozone generation unit 120 is desirably disposed along the path until vaporized droplets are collected in the second container, for example, within the first flow path 105, or inside the second container 104.

Further, the gas-containing solution production system can also decompose ozone after producing the ozone-containing solution by performing ultraviolet light irradiation, whereby exhaust ozone treatment can be performed.

Modification examples relating to the first and the second embodiments will be described below. Each of the following modification examples may be configured independently or may be combined as appropriate.

### [First Modification Example]

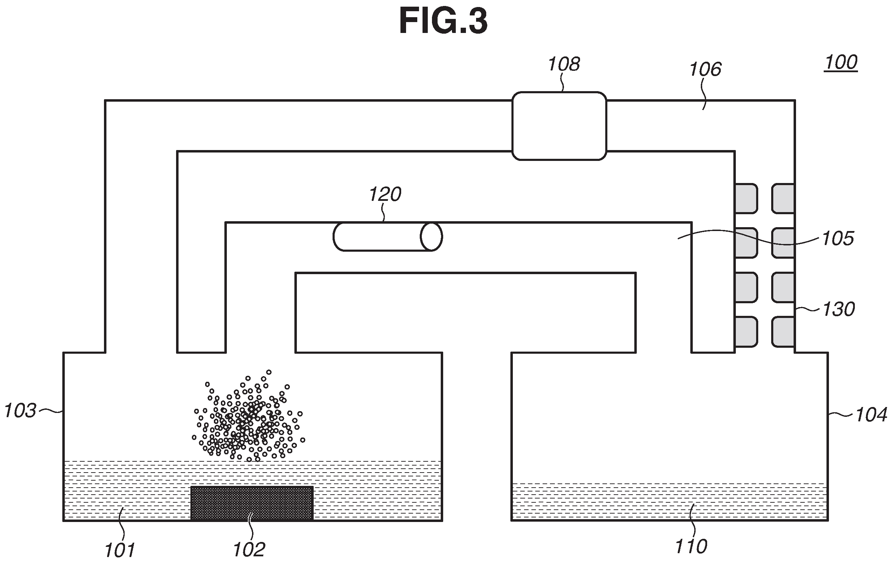

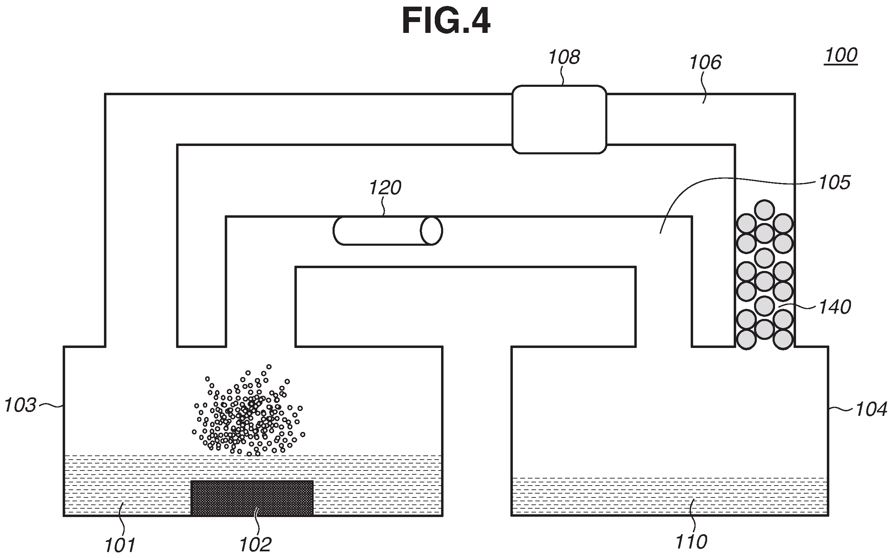

A mechanism for separating gas-gas-dissolved droplets and the gas phase will be described below with reference to Figs. 1, 3, and 4. While the separation mechanism is not particularly limited, for example in Fig. 1, a glass filter having a gas-liquid separation property by making the cross-sectional area of the gas-phase flow path irregular is provided as the separation mechanism 109 configuring the gas-containing solution production system 100. In Fig. 3, a fractionating sedge 130 to be used in distillation operations is disposed as a separation mechanism 130 configuring the gas-containing solution production system. The separation mechanism needs to be capable of separating gas-dissolved droplets and a gas phase, and other configurations, such as a cooling tube to be used for reflux or a fractionating column provided with packing material for agglomeration by making the cross-sectional area of the gas-phase flow path irregular, as shown in FIG. 4, are also desirable.

### [Second Modification Example]

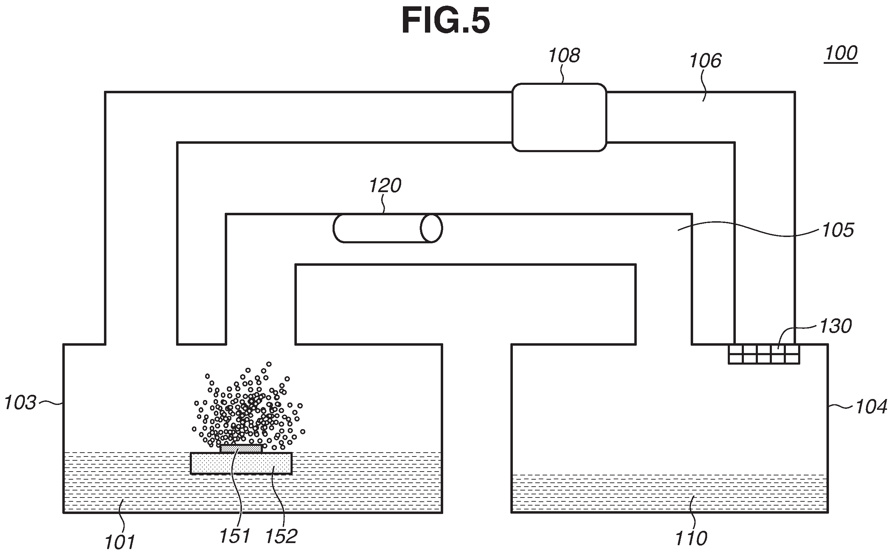

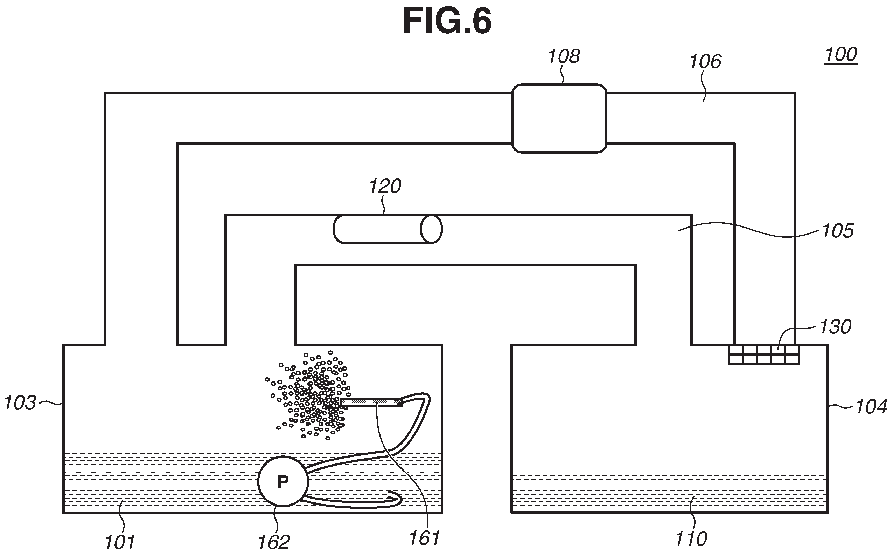

An example of a vaporization unit configuring the gas-containing solution production system 100 will be described below with reference to Figs. 1, 5, and 6. While the vaporization unit is not particularly limited, a device to be used for piezoelectric vaporization is desirable. Piezoelectric vaporization devices are roughly classified into two different types. One type is an immersion-type vaporization unit 102 which is installed in a solution to convert the liquid in the vicinity of the gas-liquid interface into fine droplets, like the vaporization unit 102 included in the gas-containing solution production system 100 illustrated in Fig. 1. The other type is a mesh-type vaporization unit 151 in which piezoelectric elements are disposed around a mesh plate, and minute liquids are supplied through mesh holes via a liquid supply medium 152, like the vaporization unit 151 included in the gas-containing solution production system illustrated in Fig. 5. Both types are desirable as the vaporization unit configuring the present invention. In addition, a vaporization unit for spraying a high-pressure liquid, or a liquid and a gas, from a micropore nozzle 161 by using a pump 162, like the vaporization unit of the gas-containing solution production system in Fig. 6, is also desirable.

### [Other Modification examples]

For the purpose of improving the gas-containing solution production system 100 according to the present invention, it is also possible to additionally provide useful mechanisms, such as, a stirring mechanism, a liquid level sensor, a liquid supplying mechanism and a liquid discharging mechanism, an air intake pump, an air exhaust pump, and a temperature adjustment mechanism.

While the liquid to be vaporized by the vaporization unit is not particularly limited and may be water, an organic liquid, or an ionic liquid, and water is desirable. The method for supplying a liquid to be vaporized by ultrasonic wave irradiation is not particularly limited. For example, when water is used as the liquid to be vaporized, water may be supplied into a tank in a batch manner or may be supplied through piping from a water supply line, moisture in the atmosphere may be condensed using a Peltier element or the like and supplied as condensate. When the liquid to be vaporized by ultrasonic wave irradiation is shaken and stirred under a desired gas atmosphere, water in which the desired gas dissolved is generated in accordance with Henry's law. Under an oxygen atmosphere, 45 parts per million (ppm) of oxygen-containing water can be obtained, whereas under atmospheric condition, water in which about 8.4 ppm of oxygen is dissolved can be obtained at room temperature.

Examples of water include purified high-purity water (ultrapure water), tap water, and hard water. These types of water may contain solutes (such as sodium chloride, electrolyte with dissociated silver nitrate, free chlorine, amino acids, saccharides, buffers, dyes and the like), or may contain dispersing elements (such as pigments, dispersing agents, cells, air bubbles, emulsions, titanium oxide, emulsifiers, and the like).

It is also possible to use a mixed liquid of water and an organic liquid. The water-soluble organic solvent to be used is not particularly limited, and specific examples include the following: alkyl alcohols having 1 to 4 carbon atoms, such as methyl alcohol, ethyl alcohol, n-propyl alcohol, isopropyl alcohol, n-butyl alcohol, sec-butyl alcohol, and tert-butyl alcohol; amides such as N-methyl-2-pyrrolidone, 2-pyrrolidone, 1,3-dimethyl-2-imidazolidinone, N,N-dimethylformamide, and N,N-dimethylacetamide; ketones or ketoalcohols such as acetone and diacetone alcohol; cyclic ethers such as tetrahydrofuran and dioxane; and ethylene glycol, 1,2-propylene glycol, and 1,3-propylene glycol.

Examples further include 1,2-butanediol, 1,3-butanediol, and 1,4-butanediol, and glycols such as 1,5-pentanediol, 1,2-hexanediol, 1,6-hexanediol, 3-methyl-1,5-pentanediol, diethylene glycol, triethylene glycol, and thiodiglycol.

Examples further include ethylene glycol monomethyl ether, ethylene glycol monoethyl ether, ethylene glycol monobutyl ether, diethylene glycol monomethyl ether, diethylene glycol monoethyl ether, and diethylene glycol monobutyl ether, and lower alkyl ethers of polyhydric alcohols such as triethylene glycol monomethyl ether, triethylene glycol monoethyl ether, and triethylene glycol monobutyl ether.

Examples further include polyalkylene glycols such as polyethylene glycol and polypropylene glycol, and triols such as glycerine, 1,2,6-hexantriol, and trimethylolpropane. The above-described water-soluble organic solvents may be used alone or in combination of two or more.

It is also possible to use liquids originated from living bodies as the liquid for gas-dissolving solutions, specifically blood, cerebrospinal fluid, or the like.

The ultrasonic irradiation unit for vaporization is not particularly limited, but a piezoelectric material is desirable. Piezoelectric materials are widely used for applications such as actuators, ultrasonic vibrators for ultrasonic wave irradiation, micro power sources, and high-voltage generation apparatuses. Many of the piezoelectric bodies used in the applications are materials commonly referred to as PZT, which are oxides containing lead (Pb), zirconium (Zr), and titanium (Ti). Therefore, in view of environmental issues, development of lead-free piezoelectric materials has been promoted. It is desirable that the lead content in the piezoelectric material be less than 1,000 ppm, and materials satisfying the requirement are defined as lead-free piezo-piezoelectric materials. Examples of lead-free piezoelectric materials include Ba-based perovskite oxides represented by a general chemical formula BaM'O3, wherein M' represents one element or a mixed crystal of two or more different elements at a composition ratio that satisfies a charge neutrality of the general formula BaM'O3. Examples of piezoelectric materials represented by BaM'O3 include BaTiO3 having a tetragonal structure at around room temperature.

A commercially available unit can be used as the ultrasonic irradiation unit. Examples include the immersion-type ultrasonic vaporization unit IM1-24 manufactured by SEIKO GIKEN INC., and the cordless aroma diffuser MJ-CAD144486320 marketed as a humidifier by MUJI, but the embodiments are not limited thereto. A nebulizer is also a desirable example of a commercially available ultrasonic vaporization generation apparatus. It is also desirable to adopt a configuration in which a liquid serving as a raw material for the fine-bubble-containing solution is separated from the liquid phase where a piezoelectric vaporization unit for ultrasonic wave irradiation is disposed, so that piezoelectric vaporization is performed indirectly. The liquid phase where a piezoelectric vaporization unit for ultrasonic wave irradiation is not particularly limited, but the QUAVA mini manufactured by Kaijo Corporation is desirable. The vibrator frequency is not particularly limited, but 1.6 megahertz (MHz) is desirable.

In a case of a spray-type vaporizer, the configuration is not particularly limited, but a desirable configuration is one including a unit provided with fine pores at the end of a hose through which liquid is pressurized and fed by a liquid pump.

In this study, an electric sprayer manufactured by Holdwell Mechanical & Electrical Co., Ltd. (product name: Ozone Nano Mist Spray) was used to generate fine droplets in a mode for spraying only without ozone generation. During the generation, a 420 milliliters (ml) water storage tank was removed and placed in the first container 103, and an unprocessed liquid 101 was supplied from a water supply pipe 162 including a liquid pump to generate fine droplets.

As an example of improving the acid resistance, alkali resistance, solvent resistance, and corrosion resistance (ozone water and the like), it is also desirable to coat wetted members of the piezoelectric element with a fluorine resin, a titanium material, or a glass member, such as quartz.

The humidity in the gas-containing solution production system 100 will be described below. The humidity in the present specification refers to the relative humidity. When gaseous component to be measured for the relative humidity is completely absent in the collection mechanism, the relative humidity of the atmosphere is defined as 0%, and when the gaseous component condenses in the collection mechanism, the relative humidity of the atmosphere is defined as 100%. When the target liquid is water, the relative humidity can be measured using a general-purpose hygrometer. However, when the target liquid is other than water, it is necessary to confirm that the component of the liquid is not present in the collection container at the start of the production. For this confirmation, a method for using a gas detection tube for the target liquid component is useful. After the confirmation, production of a gas-containing solution is started, and a state in which condensation occurs in the gas-containing solution production system 100 is defined as a state in which the relative humidity of the target liquid is 100%. Accordingly, from this state onward, while vaporization is being performed, the relative humidity remains at 100%. In this specification, the term "average of the relative humidity" refers to the average relative humidity in the space of the gas-containing solution production system 100 from the start of the production to the end of the production.

The relative humidity was measured using a temperature-humidity data logger (model number: KT-255F) manufactured by Fujita Electric Works, Ltd.

### (Embodiments)

The following describes results of producing a fine-bubble-containing solution by varying various production conditions by using the gas-containing solution production system 100 and verifying the produced fine-bubble-containing solution.

For measurement of the particle diameter distribution and the like of fine bubbles in the produced fine-bubble-containing solution, a measuring instrument (model number: SALD-7500nano) manufactured by SHIMADZU CORPORATION was used. As the comparison target, the raw material liquid before generating fine bubbles was used. The measurements included the average particle diameter (based on number), the concentration (cumulative number of bubbles with a particle diameter of 20 µm or less per 1 ml), and the particle diameter distribution (the ratio of the number-based mean molecular weight (dn) to the volume-based mean particle diameter (dw), expressed as dw/dn, with the minimum value of 1).

For quantitative analysis of components in the analysis target liquid, a pack test manufactured by Kyoritsu chemical check lab., corp. was used. For measurement of the dissolved oxygen content, a DO Meter (HQ30D) manufactured by Hach was used. For pH measurement, a LAQUA pH Meter manufactured by HORIBA Ltd. was used. In the experiment under atmospheric conditions, the gas atmosphere was set to 21% of oxygen and 79% of nitrogen, and the concentration of the dissolved gas component was calculated based on the result of the oxygen concentration measurement.

Evaluation items and evaluation criteria are as follows.

Productivity: Evaluation was performed based on the ratio of the collected liquid volume per unit time to the liquid volume collected by the method according to the first embodiment, according to the following criteria:

| | |
|---|---|
| A | 90% or higher, |
| B | 80% or higher and lower than 90%, |
| C | 50% or higher and lower than 80%, and |
| D | Lower than 50%. |

Ozone-containing gas solubility: The dissolved ozone concentration was determined based on the colorimetric reaction by the oxidative coupling with a Trinder reagent. When the measured concentration reached the upper limit, the solution was diluted with ultrapure water and then the concentration was calculated. This evaluation was determined according to the following criteria:

| | |
|---|---|
| A | 25 ppm or higher, |
| B | 10 ppm or higher and lower than 25 ppm, |
| C | 5 ppm or higher and lower than 10 ppm, and |
| D | Lower than 5 ppm. |

Dissolved ozone concentration preservation stability: The change ratio of the state after two days sealed at room temperature to the initial state was evaluated according to the following criteria:

| | |
|---|---|
| A | 90% or higher, |
| B | 70% or higher and lower than 90%, |
| C | 50% or higher and lower than 70%, and |
| D | Lower than 50%. |

Gas solubility: For gases not containing ozone, oxygen gas and nitrogen gas were used, and the mixing ratio was adjusted to verify the dissolution efficiency of the gas. For the quantitative determination, an oxygen gas densitometer (Oxygen Monitor JKO-25 Ver. 3 manufactured by JIKCO) and a dissolved oxygen densitometer (fluorescence-type dissolved oxygen meter manufactured by Hach) were used, and the calculation was adjusted with degassed water as necessary. Evaluation was determined according to the following criteria:

| | |
|---|---|
| A | 90% or higher, |
| B | 70% or higher and lower than 90%, |
| C | 50% or higher and lower than 70%, and |
| D | Lower than 50%. |

### (First Embodiment)

As the piezoelectric element for the vaporizing FB generation apparatus 101 that generates an ultrasonic wave, a piezoelectric vaporization element (1.6 MHz) manufactured by SEIKO GIKEN INC. was used. The piezoelectric element was disposed in a 500 ml beaker, and 300 ml of ultrapure water was poured. The installation height of the piezoelectric element was adjusted so that the distance between the gas-liquid interface and the piezoelectric element surface was 3.5 cm. An ozone-gas-containing-gas-containing solution was produced by using the production system illustrated in Fig. 2.

As the air supply mechanism, a chemical pump (LIQUIPORT^{®} NF1.100RC manufactured by KNF) was used.

The ozone gas concentration of the gas-containing solution production system 100 was adjusted to 150 ppm by using a Xe excimer lamp and intermittently turning the lamp ON.

As the separation mechanism, a glass filter having a filter pore diameters of 20 to 30 µm was used.

The average relative humidity (hereinbelow referred to as average relative humidity) in the collection container during production was 99%. Unless otherwise described in the following embodiments, the average relative humidity was 80% or higher.

### (Second Embodiment)

Referring to Fig. 6, as the vaporization unit, a spray-type vaporizer of an electric spray (product name: Ozone Nano Mist Spray) manufactured by Holdwell Mechanical & Electrical Co., Ltd. was used to generate fine droplets in a mode for spraying only without ozone generation. An ozone-gas-containing-gas-containing solution was produced in a similar manner to the first embodiment except that, during the generation of fine droplets, a 420 ml water storage tank was removed and placed in the first container 103, and the untreated liquid 101 was supplied from the water supply pipe 162 including a liquid pump.

### (Third Embodiment)

Referring to Fig. 1, a gas-containing solution was produced in a similar manner to the first embodiment except that an oxygen cylinder was used as the gas supply mechanism, the oxygen concentration of the gas atmosphere in the system was adjusted to 50%, and the liquid 101 was replaced with ethanol.

### (Fourth Embodiment)

A gas-containing solution was produced in a similar manner to the third embodiment except that the gas atmosphere in the gas-containing solution production system was set to pure oxygen, and the liquid 101 was replaced with water.

### (Fifth Embodiment)

A gas-containing solution was produced in a similar manner to the third embodiment except that the gas atmosphere in the gas-containing solution production system was set to pure nitrogen, and the liquid 101 was replaced with water.

### (Sixth Embodiment)

An ozone-gas-containing-gas-containing solution was produced in a similar manner to the first embodiment except that the setting height of the piezoelectric element was adjusted so that the distance between the gas-liquid interface and the piezoelectric element surface as the vaporization unit was 15 cm.

### (Seventh Embodiment)

An ozone-gas-containing-gas-containing solution was produced in a similar manner to the first embodiment except that the setting height of the piezoelectric element was adjusted so that the distance between the gas-liquid interface and the piezoelectric element surface as the vaporization unit was 16 cm.

### (Eighth Embodiment)

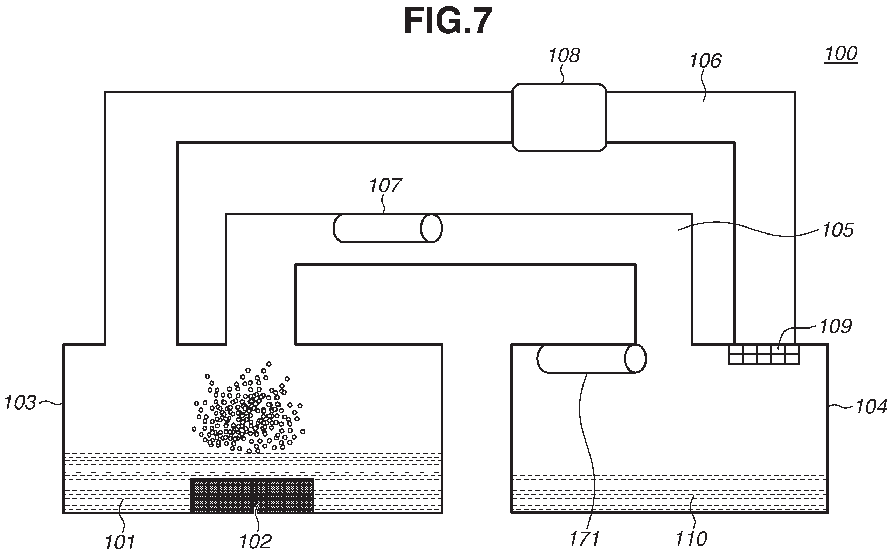

Referring to Fig. 7, an ozone-gas-containing-gas-containing solution was produced in a similar manner to the first embodiment except that an ultraviolet lamp 171 having the peak wave-length around 254 nm was provided. Conventionally, when the ozone gas concentration inside the system was measured 30 minutes after the production, it was approximately 120 ppm. However, after turning ON the ultraviolet lamp 171 for 30 minutes, the ozone gas concentration decreased to 0.1 ppm, indicating that exhaust ozone treatment had been performed.

### (Ninth Embodiment)

An ozone-gas-containing-gas-containing solution was produced in a similar manner to the first embodiment except that the liquid was intermittently vaporized so that the relative humidity in the gas-containing solution production system was 85%.

### (Tenth Embodiment)

Referring to Fig. 5, an ozone-gas-containing-gas-containing solution was produced in a similar manner to the first embodiment except that a floating mesh-type vaporizer (a rechargeable cordless floatable humidifier PR-HF043 manufactured by Life on Products, Inc.) was used as a vaporization generation unit. Although the productivity decreased compared to the first embodiment, this was due to maintaining the specifications of the vaporization unit.

### (First Comparative Embodiment)

An ozone-gas-containing-gas-containing solution was produced in a similar manner to the first embodiment except that the vaporization unit was not supplied with power, unlike the first embodiment.

### (Second Comparative Example)

A desired gas-containing solution was produced in a similar manner to the fourth embodiment except that the vaporization unit was not supplied with power, unlike the fourth embodiment.

### (Third Comparative Example)

An ozone-containing-gas-containing solution was produced in a similar manner to the first embodiment except that the blowing mechanism was not supplied with power, unlike the first embodiment.

### (Fourth Comparative Example)

A desired-gas-containing solution was produced in a similar manner to the fourth embodiment except that the blowing mechanism was not supplied with power, unlike the fourth embodiment.

### (Fifth Comparative Example)

An ozone-gas-containing-gas-containing solution was produced in a similar manner to the first embodiment except that no separation mechanism was provided in the gas-containing solution production system, unlike the first embodiment.

### (Sixth Comparative Example)

An ozone-gas-containing-gas-containing solution was produced only in the first container by blocking the first and the second flow paths, unlike the first embodiment.

### (Seventh Comparative Example)

An ozone-gas-containing-gas-containing solution was produced in a similar manner to the first embodiment except that the nozzle of the electric spray was disassembled, and the fine-pore nozzle was removed so that water flowed as a stream rather than water droplets in the first container, unlike the second embodiment.

The above-described embodiments and comparative examples are summarized in the following tables.

### [Table 1]

**Table 1**

| | | Ex. 1 | Ex. 2 | Ex. 3 | Ex. 4 | Ex. 5 | Ex. 6 | Ex. 7 | Ex. 9 | Ex. 9 | Ex. 10 |
|---|---|---|---|---|---|---|---|---|---|---|---|
| Characteristics | Gas | Ozone | Ozone | Oxygen | Oxygen | Nitrogen | Ozone | Ozone | Ozone | Ozone | Ozone |
| | Gas concentration | 150 ppm | 150 ppm | 50% | 100% | 100% | 150 ppm | 150 ppm | 150 ppm | 150 ppm | 150 ppm |
| | Ozone water concentration (ppm) | 30 | 12 | Not performed | Not performed | Not performed | 15 | 10 | 0 | 30 | 30 |
| | FB concentration (hundred million/ml) | 20 | 0.2 | 3 | 20 | 20 | 1 | 1 | 19 | 20 | 15 |
| | UFB number percentage | 99.9 | 96 | 99.5 | 99.9 | 99.9 | 98 | 98 | 99.9 | 99.9 | 99.9 |
| | UFB particle diameter distribution | 3.4 | 6.8 | 3.4 | 3.4 | 3.4 | 5 | 5.4 | 3.6 | 3.4 | 3.2 |
| | Desired dissolved gas concentration (ppm) | 20 | 12 | 8 | 45 | 18 | 15 | 10 | 0 | 20 | 30 |
| | Oxygen gas solubility (ppm) | Not performed | Not performed | 22.5 | 45 | 0 | Not performed | Not performed | Not performed | Not performed | Not performed |
| Effects | Productivity | A | A | A | A | A | B | B | A | B | C |
| | Ozone gas solubility | A | C | Not performed | Not performed | Not performed | B | B | A | A | A |
| | Dissolved ozone concentration preservation stability | A | B | Not performed | Not performed | Not performed | B | B | D | A | A |
| | Gas solubility | Not performed | Not performed | A | A | A | Not performed | Not performed | Not performed | Not performed | Not performed |
| | pH | A | A | A | A | A | A | B | A | A | A |

**[Table 2]**

| | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|
| Characteristics | Gas | Ozone | Oxygen | Ozone | Oxygen | Ozone | Ozone | Ozone |
| | Gas concentration | 150 ppm | 100% | 150 ppm | 100% | 150 ppm | 150 ppm | 150 ppm |
| | Ozone water concentration (ppm) | 1 | Not performed | 20 | Not performed | 15 | 20 | 8 |
| | FB concentration (hundred nillion/ml) | Undetected | Undetected | 20 | 19 | 20 | 20 | 20 |
| | UFB number percentage | None | None | 99.9 | 99.9 | 99.9 | 99.9 | 99.9 |
| | UFB particle diameter distribution | None | None | 3.5 | 3.7 | 3.5 | 3.6 | 3.6 |
| | Desired dissolved gas concentration (ppm) | 1 | 15 | 20 | 8 | 15 | 20 | 6 |
| | Oxygen gas solubility (ppm) | Not performed | 15 | Not performed | 22 | Not performed | Not performed | Not performed |
| Effects | Productivity | D | D | D | D | D | A | D |
| | Ozone gas solubility | Not possible | Not possible | A | Not performed | A | B | C |
| | Dissolved ozone concentration preservation stability | C | Not performed | D | Not performed | D | D | D |
| | Gas solubility | Not performed | D | Not performed | D | Not performed | 20 ppm | 8 ppm |
| | pH | A | A | D | C | D | D | D |

The present invention is not limited to the above-described embodiments, and various modifications and alterations may be made without departing from the spirit and scope of the present invention. Accordingly, the following claims are appended in order to publicly disclose the scope of the invention.

This application claims the benefit of Japanese Patent Application No. 2023-145292, filed September 7, 2023, which is hereby incorporated by reference herein in its entirety.

## Claims

1. A gas-containing solution production method comprising:
a vaporization step of vaporizing a liquid stored in a first container;
a generation step of generating, by bringing a gas into contact with the vaporized liquid, droplets with the gas dissolved;
a transfer step of transferring the gas-dissolved droplets into a second container via a first flow path, separating the gas-dissolved droplets, and transferring a residual gas into the first container via a second flow path; and
a collection step of collecting the separated gas-dissolved droplets.

2. The gas-containing solution production method according to Claim 1, wherein, in the vaporization step, the liquid is vaporized by an ultrasonic wave generated by a vibration of an ultrasonic vibrator disposed in the first container.

3. The gas-containing solution production method according to Claim 1, wherein the liquid contains at least water.

4. The gas-containing solution production method according to Claim 1, wherein the gas contains at least ozone.

5. The gas-containing solution production method according to any one of Claims 1 to 4, wherein the gas-dissolved liquid collected in the collection step contains fine bubbles with a diameter of 20 micrometers (µm) or less.

6. The gas-containing solution production method according to Claim 5, wherein a number percentage of ultra fine bubbles to a number of fine bubbles having a diameter of 20 µm or less is 99% or higher.

7. The gas-containing solution production method according to Claim 6, wherein for the ultra-fine bubbles, a ratio (dw/dn) of a volume-based mean particle diameter (dw) to a number-based mean particle diameter (dn) of bubbles having a diameter of 20 µm or less is 5 or less.

8. The gas-containing solution production method according to Claim 2, wherein in the vaporization step, a thickness of the liquid from the ultrasonic vibrator to a liquid level is 15 centimeters (cm) or less.

9. The gas-containing solution production method according to Claim 1, wherein in the generation step, the gas-dissolved droplets are generated under an environment where an average relative humidity is 90% or higher.

10. The gas-containing solution production method according to any one of Claims 1 to 4, wherein ultraviolet light is irradiated in a subsequent step.

11. A gas-containing solution production system comprising:
a first container configured to be isolated from an ambient air and include a vaporization unit for vaporizing a liquid stored therein;
a second container isolated from the ambient air;
a first flow path and a second flow path configured to connect the first container and the second container;
a supply mechanism configured to supply a gas to the vaporized liquid;
a blowing mechanism configured to transfer a gas in the second flow path to the first container via the second flow path; and
a separation mechanism configured to separate a gas and the vaporized liquid,
wherein a gas supplied by the supply mechanism for a gas is brought into contact with the vaporized liquid to generate gas-dissolved droplets,
wherein the gas-dissolved droplets are separated by the separation mechanism, and
wherein the gas remained is transferred into the first container via the second flow path by the blowing mechanism, and the separated gas-dissolved droplets are collected via the second container.

12. The gas-containing solution production system according to Claim 11, wherein the vaporization unit includes an ultrasonic vibrator.
